(19) Europäisches Patentamt
European Patent Office
Office européen des brevets

(11) **EP 4 787 219 A1**

(12) **EUROPEAN PATENT APPLICATION**
published in accordance with Art. 153(4) EPC

(43) Date of publication:
**05.08.2026 Bulletin 2026/32**

(51) International Patent Classification (IPC):
***G06F 30/23*** (2020.01)

(21) Application number: **24878801.0**

(22) Date of filing: **24.09.2024**

(86) International application number:
**PCT/CN2024/120591**

(87) International publication number:
**WO 2025/082154 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.10.2023 CN 202311345581**

(71) Applicant: **Dongfeng Motor Group Co., Ltd.**
**Wuhan, Hubei 430000 (CN)**

(72) Inventors:
• **WANG, Dongxiong**
**Wuhan, Hubei 430056 (CN)**

• **YU, Zewen**
**Wuhan, Hubei 430056 (CN)**
• **ZHAO, Yanxin**
**Wuhan, Hubei 430056 (CN)**
• **ZHOU, Kun**
**Wuhan, Hubei 430056 (CN)**
• **ZHENG, Yangqianlun**
**Wuhan, Hubei 430056 (CN)**

(74) Representative: **Lohmanns Lohmanns & Partner mbB**
**Benrather Schlossallee 49-53**
**40597 Düsseldorf (DE)**

(54) **METHOD, APPARATUS AND DEVICE FOR DETERMINING YIELD ROTATION SPEED OF ROTOR, AND STORAGE MEDIUM**

(57) Provided in the present application are a method, apparatus and device for determining the yield rotation speed of a rotor, and a storage medium. The method comprises: acquiring the dimensional tolerance of the outer diameter of a rotor and vibration information of the rotor at each specific rotation speed among a plurality of specific rotation speeds; on the basis of the plurality of specific rotation speeds and the vibration information of the rotor at each specific rotation speed, determining a deformation trend of the rotor; on the basis of the deformation trend, determining an elastic deformation trend of the rotor, the deformation trend and the elastic deformation trend being used for representing the dimensional change of the outer diameter of the rotor; and, on the basis of the elastic deformation trend, the deformation trend and the dimensional tolerance of the outer diameter, determining the yield rotation speed of the rotor.

| acquiring a dimensional tolerance of an outer diameter of the rotor and vibration information of the rotor at each of the specific rotation speeds among a plurality of specific rotation speeds | S101 |

| determining a deformation trend of the rotor based on the plurality of specific rotation speeds and the vibration information of the rotor at each of the specific rotation speeds | S102 |

| determining an elastic deformation trend of the rotor based on the deformation trend | S103 |

| determining the yield rotation speed of the rotor based on the elastic deformation trend, the deformation trend, and the dimensional tolerance of the outer diameter | S104 |

Fig. 1

Processed by Luminess, 75001 PARIS (FR)

# EP 4 787 219 A1

**Description**

**Field of the Invention**

The present application relates to, but is not limited to, the field of motor technology, and in particular relates to a method, apparatus and device for determining a yield rotation speed of a rotor, and a storage medium.

**Background of the Invention**

High-speed operation is one of the important future development trends of drive motors for new energy vehicles and an important technical pathway for achieving high power density and lightweight design of drive motors. High-speed drive motors have attracted extensive attention from numerous researchers and engineers in the field of new energy vehicles.

The maximum operating rotation speed of a high-speed drive motor is limited by the mechanical strength of its rotor. In order to ensure that the structural integrity of the rotor is not compromised by high-speed centrifugal force, and to fully utilize the strength performance of the rotor material as much as possible, the maximum allowable operating rotation speed of a high-speed drive motor should be equal to or close to the yield rotation speed of the rotor structure. The yield rotation speed of the rotor structure refers to the rotation speed at which the rotor core material begins to yield during high-speed operation. At the yield rotation speed, the rotor structure starts to undergo slight plastic deformation without affecting the normal operation of the motor. At this point, if the motor rotation speed continues to increase, the rotor structure will undergo harmful plastic deformation, significantly increasing the risk of rotor-to-stator rubbing and jeopardizing the safe operation of the motor. Therefore, determining the yield rotation speed of a high-speed drive motor is critical for fully utilizing motor performance and ensuring safe operation.

In the related art, in order to determine the yield rotation speed of a motor, a finite element analysis method is often used to analyze the rotor strength at a given maximum allowable rotation speed, so as to obtain the yield strength of the rotor. However, the determination of the maximum allowable rotation speed of the rotor in the related art is overly conservative, which prevents full utilization of the strength performance of the rotor material, and thus fails to accurately determine the yield rotation speed of the rotor structure.

**Summary of the Invention**

In view of this, the embodiments of the present application provide at least a method, apparatus and device for determining a yield rotation speed of a rotor, and a storage medium.

The technical solutions in the embodiments of the present application are implemented as follows.

In one aspect, the embodiments of the present application provide a method for determining a yield rotation speed of a rotor, which comprises the following steps:
acquiring a dimensional tolerance of an outer diameter of the rotor and vibration information of the rotor at each of the specific rotation speeds among a plurality of specific rotation speeds; determining a deformation trend of the rotor based on the plurality of specific rotation speeds and the vibration information of the rotor at each of the specific rotation speeds; determining an elastic deformation trend of the rotor based on the deformation trend, wherein the deformation trend and the elastic deformation trend are configured to represent changes in the outer diameter of the rotor; and determining the yield rotation speed of the rotor based on the elastic deformation trend, the deformation trend, and the dimensional tolerance of the outer diameter.

In some embodiments, the deformation trend comprises a deformation curve equation; and the step of determining the deformation trend of the rotor based on the plurality of specific rotation speeds and the vibration information of the rotor at each of the specific rotation speeds comprises: determining a plurality of data points based on the plurality of specific rotation speeds and the vibration information at each of the specific rotation speeds; and performing a first fitting process on the plurality of data points to obtain the deformation curve equation.

In the above embodiments, the plurality of data points can be determined based on the plurality of specific rotation speeds and the vibration information at each of the specific rotation speeds; then, the first fitting process is performed on the plurality of data points to obtain the deformation curve equation. In this way, through performing the first fitting process on the data points comprising the specific rotation speeds and the vibration information corresponding thereto, the deformation curve equation that accurately represents the relationship between the rotation speeds and the vibration information of the rotor can be obtained.

In some embodiments, the step of determining the elastic deformation trend of the rotor based on the deformation trend comprises: determining a plurality of elastic data points among the plurality of data points on the deformation curve equation; and determining the elastic deformation trend of the rotor based on the plurality of elastic data points.

In the above embodiments, a plurality of elastic data points are determined among the plurality of data points on the deformation curve equation, and the elastic deformation trend of the rotor is then determined based on the plurality of elastic data points. In this way, through performing a second fitting process on the plurality of elastic data points comprising the specific rotation speeds and the vibration information corresponding thereto, the elastic deformation trend that accurately represents the relationship between the rotation speeds and the vibration information of the rotor during elastic deformation can be obtained.

In some embodiments, the step of determining the yield rotation speed of the rotor based on the elastic deformation trend, the deformation trend, and the dimensional tolerance of the outer diameter comprises: equating a difference between the elastic deformation trend and the deformation trend to the dimensional tolerance of the outer diameter to obtain a yield rotation speed equation, wherein the difference between the elastic deformation trend and the deformation trend is configured to represent a plastic dimensional change caused by plastic deformation of the rotor; and processing the yield rotation speed equation through a graphical method to obtain the yield rotation speed of the rotor.

In the above embodiments, the difference between the elastic deformation trend and the deformation trend is equated to the dimensional tolerance of the outer diameter to obtain the yield rotation speed equation; then, the yield rotation speed equation is processed by the graphical method to obtain the yield rotation speed of the rotor. In this way, when the plastic dimensional change caused by plastic deformation of the rotor is equal to the dimensional tolerance of the outer diameter, it can be determined that plastic deformation occurs in the rotor, and the rotation speed corresponding to such plastic deformation can be determined by the graphical method. Accordingly, the yield rotation speed of the rotor can be accurately determined.

In some embodiments, the step of acquiring the dimensional tolerance of the outer diameter of the rotor and vibration information of the rotor at each of the specific rotation speeds among the plurality of specific rotation speeds comprises: acquiring the dimensional tolerance of the outer diameter of the rotor, an initial rotation speed of the rotor, and a final rotation speed of the rotor, wherein the yield rotation speed is comprised between the initial rotation speed and the final rotation speed; acquiring the plurality of specific rotation speeds between the initial rotation speed and the final rotation speed based on a preset step size; and acquiring the vibration information of the rotor at each of the specific rotation speeds.

In the above embodiments, the plurality of specific rotation speeds are obtained between the initial rotation speed and the final rotation speed that comprise the yield rotation speed of the rotor based on the preset step size, and then the vibration information of the rotor at each of the specific rotation speeds is obtained. In this way, through acquiring the initial rotation speed and the final rotation speed, the true yield rotation speed of the rotor can be ensured to be comprised between the initial rotation speed and the final rotation speed, thereby improving the accuracy of determining the yield rotation speed of the rotor based on the plurality of specific rotation speeds between the initial rotation speed and the final rotation speed. Moreover, the plurality of specific rotation speeds are obtained between the initial rotation speed and the final rotation speed based on the preset step size, and the plurality of specific rotation speeds can be uniformly obtained, thereby improving the accuracy of determining the deformation trend and the elastic deformation trend of the rotor, and further improving the accuracy of determining the yield rotation speed of the rotor.

In another aspect, the embodiments of the present application provide an apparatus for determining a yield rotation speed of a rotor, which comprises:

an acquisition module, which is configured to acquire a dimensional tolerance of an outer diameter of the rotor and vibration information of the rotor at each of the specific rotation speeds among a plurality of specific rotation speeds;

a first determination module, which is configured to determine a deformation trend of the rotor based on the plurality of specific rotation speeds and the vibration information of the rotor at each of the specific rotation speeds;

a second determination module, which is configured to determine an elastic deformation trend of the rotor based on the deformation trend; and

a third determination module, which is configured to determine the yield rotation speed of the rotor based on the elastic deformation trend, the deformation trend, and the dimensional tolerance of the outer diameter.

In yet another aspect, the embodiments of the present application provide a device for determining a yield rotation speed of a rotor, which comprises a memory and a processor, the memory stores a computer program executable on the processor, and when the processor executes the program, part or all of the steps of the above method are implemented.

In still another aspect, the embodiments of the present application provide a computer-readable storage medium, with a computer program stored thereon, and when the computer program is executed by a processor, part or all of the steps of the above method are implemented.

In the embodiments of the present application, a deformation trend of the rotor can be determined based on a plurality of specific rotation speeds of the rotor and vibration information of the rotor at each of the specific rotation speeds;

then, an elastic deformation trend of the rotor can be determined based on the deformation trend; and finally, a yield rotation speed of the rotor can be determined based on the dimensional tolerance of the outer diameter of the rotor, the elastic deformation trend, and the deformation trend. In this way, the deformation trend and the elastic deformation trend of the rotor can be determined through a dynamic experimental testing method, and the deformation trend and the elastic deformation trend can reflect changes in the outer diameter of the rotor during rotation, so that the yield rotation speed of the rotor can be accurately determined based on the dimensional tolerance of the outer diameter of the rotor, the elastic deformation trend, and the deformation trend.

It should be understood that the above general description and the following detailed description are exemplary and explanatory, and do not intend to limit the technical solutions of the present disclosure.

**Brief Description of the Drawings**

The drawings are incorporated into the specification and form a part thereof, these drawings illustrate embodiments in accordance with the present application and are used together with the specification to explain the technical solutions of the present application.

Fig. 1 is a schematic diagram of an implementation flow of a method for determining a yield rotation speed of a rotor in an embodiment of the present application;

Fig. 2 is a structural diagram of a rotor rotation test bench in an embodiment of the present application;

Fig. 3 is a schematic diagram of an implementation flow of a method for determining a yield rotation speed of a rotor in an embodiment of the present application;

Fig. 4 is a schematic diagram of an implementation flow of a method for determining a yield rotation speed of a rotor in an embodiment of the present application;

Fig. 5 is a schematic diagram of a deformation curve and an elastic deformation line in an embodiment of the present application;

Fig. 6 is a schematic diagram of an implementation flow of a method for determining a yield rotation speed of a rotor in an embodiment of the present application;

Fig. 7 is a schematic diagram of an implementation flow of a method for determining a yield rotation speed of a rotor in an embodiment of the present application;

Fig. 8 is a schematic diagram of a vibration displacement curve in an embodiment of the present application;

Fig. 9 is a schematic diagram of an implementation flow of a method for determining a yield rotation speed of a rotor in an embodiment of the present application;

Fig. 10 is a schematic diagram of a yield rotation speed actual test of a rotor in an embodiment of the present application;

Fig. 11 is a schematic structural diagram of an apparatus for determining a yield rotation speed of a rotor in an embodiment of the present application;

Fig. 12 is a schematic structural diagram of a device for determining a yield rotation speed of a rotor in an embodiment of the present application.

**Detailed Description of the Embodiments**

In order to make the objectives, technical solutions, and advantages of the present application more apparent, the technical solutions of the present application will be further described in detail below with reference to the accompanying drawings and embodiments, the described embodiments should not be construed as limiting the present application, and all other embodiments obtained by those skilled in the art without inventive effort shall fall within the protection scope of the present application.

In the following description, reference to "some embodiments" describes a subset of all possible embodiments. It should be understood that "some embodiments" can refer to the same or different subsets of all possible embodiments, and can be combined with each other without conflict.

The terms "first", "second" and "third" involved are used merely to distinguish similar objects and do not imply any particular order of the objects. It should be understood that "first", "second" and "third" can be interchanged in a specific order or sequence where permitted, so that the embodiments of the present application described herein can be implemented in an order other than that illustrated or described.

Unless otherwise defined, all technical and scientific terms used herein have the same meaning as commonly understood by those skilled in the art to which the present application pertains. The terminology used herein is for the purpose of describing the present application only and is not intended to limit the present application.

The embodiments of the present application provide a method for determining a yield rotation speed of a rotor, and the method can be executed by a processor of a computer device. The computer device can refer to a server, a laptop computer, a tablet computer, a desktop computer, a smart television, a set-top box, or a mobile device (such as a mobile phone, a portable video player, a personal digital assistant, a dedicated messaging device, or a portable gaming device), or other devices having data processing capabilities.

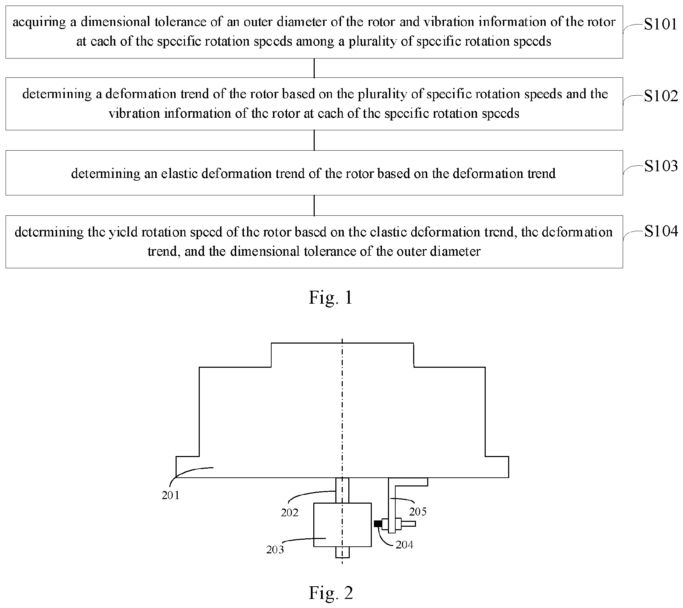

Fig. 1 is a schematic diagram of an implementation flow of a method for determining a yield rotation speed of a rotor in an embodiment of the present application. As shown in Fig. 1, the method comprises S101 to S104:

S101: A dimensional tolerance of an outer diameter of the rotor and vibration information of the rotor at each of the specific rotation speeds among a plurality of specific rotation speeds are acquired.

The dimensional tolerance of the outer diameter of the rotor can be defined as the absolute value of the difference between a maximum limit dimension and a minimum limit dimension of the outermost diameter of the rotor. The dimensional tolerance of the outer diameter can represent an allowable variation of the outer diameter of the rotor. The specific rotation speeds can be rotation speeds within a preset rotation speed range, wherein the preset rotation speed range can be preset in advance. The vibration information is configured to represent the vibration displacement of the rotor at a specific rotation speed. When the rotor rotates at a specific rotation speed, the rotor is displaced due to high-speed centrifugal force. Therefore, through acquiring the vibration information of the rotor at each of the plurality of specific rotation speeds, the vibration displacement of the rotor at each of the specific rotation speeds can be determined.

In some embodiments, the vibration information of the rotor at each of the plurality of specific rotation speeds can be acquired through a displacement sensor. The displacement sensor can be arranged at the middle portion of the side surface of the rotor, and can be a non-contact displacement sensor; for example, the displacement sensor can be at least one of an eddy current displacement sensor and an ultrasonic displacement sensor.

The embodiments of the present application provide a rotor rotation test bench. As shown in Fig. 2, the rotor rotation test bench comprises a high-speed prime mover 201, a tooling shaft 202, a rotor 203, a displacement sensor 204, and a sensor bracket 205. A protruding end of the high-speed prime mover 201 is provided with the tooling shaft 202, and the tooling shaft 202 is connected to the rotor 203; one end of the sensor bracket 205 is connected to the lower end surface of the high-speed prime mover 201, and the other end is connected to the displacement sensor 204; the displacement sensor 204 is located at the side surface of the rotor 203, and a preset distance is maintained between the displacement sensor 204 and the side surface of the rotor 203. In the embodiments of the present application, the high-speed prime mover 201 can drive the rotor 203 to rotate at different specific rotation speeds, and the displacement sensor 204 can collect the vibration information of the rotor at each of the specific rotation speeds.

In the embodiments of the present application, through acquiring the dimensional tolerance of the outer diameter of the rotor, an allowable variation of the outer diameter of the rotor can be determined, and through acquiring the vibration information of the rotor at each of a plurality of specific rotation speeds, the vibration displacement of the rotor at each of the specific rotation speeds can be determined. When the vibration displacement exceeds the allowable variation of the outer diameter of the rotor, it indicates that the corresponding specific rotation speed is excessively high and that the mechanical structure of the rotor has undergone harmful plastic deformation. Therefore, through acquiring the dimensional tolerance of the outer diameter of the rotor and the vibration information of the rotor at each of the plurality of specific rotation speeds, the yield rotation speed of the rotor can be accurately determined.

S102: A deformation trend of the rotor is determined based on the plurality of specific rotation speeds and the vibration information of the rotor at each of the specific rotation speeds.

The deformation trend herein is configured to represent changes in the outer diameter of the rotor at the plurality of specific rotation speeds. The changes in the outer diameter can comprise elastic dimensional changes caused by elastic deformation of the rotor, plastic dimensional changes caused by plastic deformation of the rotor, and dynamic displacement dimensional changes caused by dynamic effects. In other words, as the specific rotation speeds gradually increase, the rotor first undergoes elastic deformation and then plastic deformation, resulting in a gradual increase in the outer diameter of the rotor. Therefore, the deformation trend of the rotor can be determined based on the plurality of specific rotation speeds and the vibration information of the rotor at each of the specific rotation speeds.

S103: An elastic deformation trend of the rotor is determined based on the deformation trend.

The elastic deformation trend herein is configured to represent changes in the outer diameter of the rotor. The changes in the outer diameter can comprise elastic dimensional changes caused by elastic deformation of the rotor and dynamic displacement dimensional changes caused by dynamic effects.

In some embodiments, a plurality of elastic data points that approximately have a linear relationship can be determined from the deformation trend, and the fitting process are performed on the plurality of elastic data points to obtain the elastic deformation trend of the rotor. The plurality of elastic data points that approximately have a linear relationship herein can be data points that are approximately located on a straight line. During elastic deformation of the rotor, since the rotation speed of the rotor and the vibration information of the rotor have a linear relationship, the elastic deformation trend of the rotor can be obtained through performing the fitting process on the plurality of elastic data points that approximately have a linear relationship.

S104: The yield rotation speed of the rotor is determined based on the elastic deformation trend, the deformation trend, and the dimensional tolerance of the outer diameter.

In the embodiments of the present application, a yield rotation speed equation can be determined based on the elastic deformation trend, the deformation trend, and the dimensional tolerance of the outer diameter, and then, the yield rotation speed of the rotor can be obtained through solving the yield rotation speed equation.

In some embodiments, the yield rotation speed equation can be defined as a difference between the deformation trend and the elastic deformation trend being equal to the dimensional tolerance of the outer diameter. The deformation trend herein comprises elastic dimensional changes caused by elastic deformation of the rotor, plastic dimensional changes caused by plastic deformation of the rotor, and dynamic displacement dimensional changes caused by dynamic effects, and the elastic deformation trend comprises elastic dimensional changes caused by elastic deformation of the rotor and dynamic displacement dimensional changes caused by dynamic effects. That is, the difference between the deformation trend and the elastic deformation trend corresponds to the plastic dimensional change caused by plastic deformation of the rotor. When the plastic dimensional change is equal to the dimensional tolerance of the outer diameter, the rotation speed corresponding to the plastic dimensional change is the yield rotation speed of the rotor. Since the dimensional tolerance of the outer diameter represents an allowable variation of the outer diameter of the rotor, when the variation in the outer diameter of the rotor caused by plastic deformation is equal to the allowable variation (that is, the dimensional tolerance of the outer diameter), it indicates that the rotation speed of the rotor has reached a limit rotation speed (that is, the yield rotation speed). If the rotation speed of the rotor continues to increase, the structure of the rotor will undergo harmful plastic deformation, that is, the variation in the outer diameter of the rotor will exceed the dimensional tolerance of the outer diameter, which will significantly increase the risk of rotor-to-stator rubbing of the drive motor and jeopardize the safe operation of the motor.

In the embodiments of the present application, the deformation trend of the rotor can be determined based on a plurality of specific rotation speeds of the rotor and vibration information of the rotor at each of the specific rotation speeds; then, an elastic deformation trend of the rotor can be determined based on the deformation trend; and finally, the yield rotation speed of the rotor can be determined based on the dimensional tolerance of the outer diameter of the rotor, the elastic deformation trend, and the deformation trend. In this way, the deformation trend and the elastic deformation trend of the rotor can be determined through a dynamic experimental testing method, and the deformation trend and the elastic deformation trend can reflect changes in the outer diameter of the rotor during rotation, so that the yield rotation speed of the rotor can be accurately determined based on the dimensional tolerance of the outer diameter of the rotor, the elastic deformation trend, and the deformation trend.

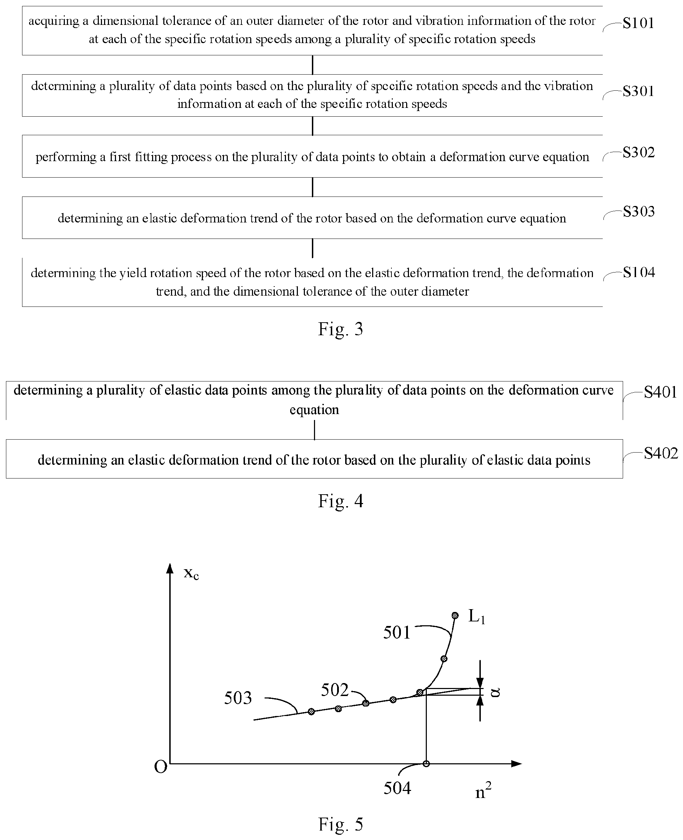

In some embodiments, the deformation trend comprises a deformation curve equation; S102 can be implemented by S301 and S302, and S103 can be implemented by S303, which will be described with reference to the steps shown in Fig. 3.

S301: A plurality of data points are determined based on the plurality of specific rotation speeds and the vibration information at each of the specific rotation speeds.

In the embodiments of the present application, when determining the data points, first coordinate information of each data point can be determined based on the specific rotation speed, and the vibration information at the specific rotation speed can be taken as second coordinate information of the data point. In some embodiments, the first coordinate information can be horizontal coordinate information, and the second coordinate information can be vertical coordinate information.

In some embodiments, the square of the specific rotation speed can be taken as the first coordinate information of the data point. The reason for taking the square of the specific rotation speed as the first coordinate information of the data point is explained below with reference to Formula (1). As shown in Formula (1):

$$F = me\omega^2 = \frac{(\pi^2\, me)}{900}\, n^2 \qquad\qquad \text{Formula (1)}$$

wherein $F$ is an unbalanced force of the rotor, $m$ is a mass of the rotor, $e$ is an eccentricity between a center of mass and a geometric centroid of the rotor, $\omega$ is an angular velocity of the rotor (in rad/s), and $n$ is a specific rotation speed of the rotor (in r/min).

It can be seen that, under the condition that the unbalanced force of the rotor is the main excitation, the square of the rotation speed of the rotor is proportional to the unbalanced force of the rotor. Meanwhile, when the structure of the rotor does not undergo plastic deformation, the vibration displacement of the rotor is proportional to the square of the rotation speed. Therefore, taking the square of the specific rotation speed as the first coordinate information of the data point and taking the vibration information at the specific rotation speed as the second coordinate information of the data point can better describe the relationship between the rotation speed and the vibration displacement of the rotor during rotation.

S302: A first fitting process is performed on the plurality of data points to obtain a deformation curve equation.

The first fitting process herein can comprise at least one of the following: least squares method, cubic spline interpolation function, polynomial fitting, exponential fitting, neural network, and support vector machine.

In the embodiments of the present application, the deformation curve equation can be expressed by Formula (2):

$$L_1 = x_{c1} \ (n^2) \qquad\qquad \text{Formula (2)}$$

wherein $L_1$ represents a deformation curve, $x_{c1}$ represents vibration information of the rotor when plastic deformation occurs, and $n$ represents a specific rotation speed.

S303: An elastic deformation trend of the rotor is determined based on the deformation curve equation.

In the embodiments of the present application, a plurality of elastic data points can be obtained from the deformation curve equation, and the elastic deformation trend of the rotor can be determined based on the plurality of elastic data points.

In the embodiments of the present application, a plurality of data points can be determined based on a plurality of specific rotation speeds and vibration information at each of the specific rotation speeds; then, the first fitting process is performed on the plurality of data points to obtain the deformation curve equation. In this way, through performing the first fitting process on the data points comprising the specific rotation speeds and the vibration information corresponding thereto, the deformation curve equation that accurately represents the relationship between the rotation speeds and the vibration information of the rotor can be obtained.

In some embodiments, the elastic deformation trend comprises an elastic deformation linear equation; S103 can be implemented by S401 and S402, which will be described with reference to the steps shown in Fig. 4.

S401: A plurality of elastic data points are determined among the plurality of data points on the deformation curve equation.

The elastic data points herein are configured to represent a variation state of vibration information with respect to specific rotation speeds during elastic deformation of the rotor. Since the vibration information of the rotor during elastic deformation is approximately linearly related to the specific rotation speeds, the plurality of elastic data points are approximately located on a straight line. The straight line can represent the elastic deformation trend of the rotor.

In the embodiments of the present application, since the deformation curve equation is obtained through performing the first fitting process on a plurality of data points, the deformation curve corresponding to the deformation curve equation obtained by fitting can pass through all the data points. Therefore, among the plurality of data points on the deformation curve equation, a plurality of elastic data points having distances to a preset reference line fall within a preset range can be determined.

In some embodiments, the plurality of elastic data points can be determined from the plurality of data points on the deformation curve equation based on specific rotation speeds or vibration information. The plurality of elastic data points herein can be determined in ascending order based on the magnitude relationship of the specific rotation speeds in the data points, or the plurality of elastic data points can be determined in ascending order based on the magnitude relationship of the vibration information in the data points.

The embodiments of the present application provide a schematic diagram of a deformation curve. As shown in Fig. 5, a deformation curve 501 corresponding to the deformation curve equation is plotted with $x_c$ as the vertical coordinate and $n^2$ as the horizontal coordinate, wherein $x_c$ represents vibration information and $n$ represents a specific rotation speed. The deformation curve 501 comprises a plurality of elastic data points 502 (four elastic data points are shown in Fig. 5). The elastic data points 502 can be determined in ascending order based on the magnitude relationship of the specific rotation speeds, or can be determined in ascending order based on the magnitude relationship of the vibration information.

S402: An elastic deformation trend of the rotor is determined based on the plurality of elastic data points.

Since the vibration information of the rotor during elastic deformation is approximately linearly related to the specific rotation speeds, the elastic deformation trend of the rotor can be represented by a straight line. Therefore, the elastic deformation trend can be represented by an elastic deformation linear equation.

In the embodiments of the present application, the elastic deformation linear equation can be expressed by Formula (3):

$$L_2 = x_{c2} \; (n^2) \qquad\qquad \text{Formula (3)}$$

wherein $L_2$ represents an elastic deformation straight line, $x_{c2}$ represents vibration information of the rotor during the elastic deformation process, and $n$ represents a specific rotation speed.

In the embodiments of the present application, the second fitting process can be performed on a plurality of elastic data points to obtain an elastic deformation linear equation of the rotor. The second fitting process can comprise at least one of the following: least squares method, cubic spline interpolation function, polynomial fitting, exponential fitting, neural network, and support vector machine.

As shown in Fig. 5, an elastic deformation straight line 503 corresponding to the elastic deformation linear equation is obtained through performing the second fitting process on the plurality of elastic data points 502.

In the embodiments of the present application, a plurality of elastic data points are determined among the plurality of data points on the deformation curve equation, and the elastic deformation trend of the rotor is determined based on the plurality of elastic data points. In this way, through performing the second fitting process on the plurality of elastic data points comprising the specific rotation speeds and the vibration information corresponding thereto, the elastic deformation trend that accurately represents the relationship between the rotation speeds and the vibration information of the rotor during elastic deformation can be obtained.

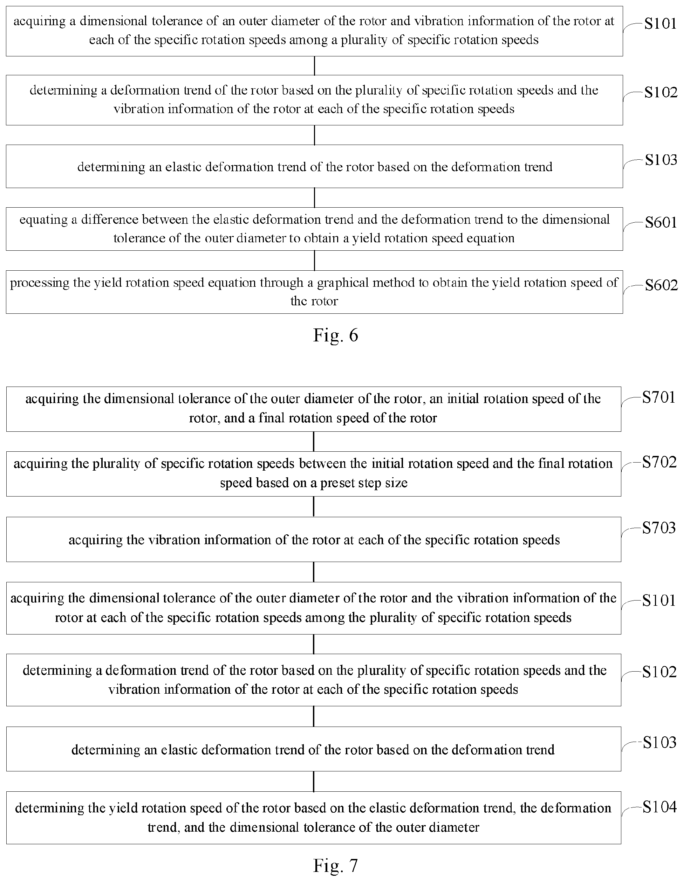

In some embodiments, S104 can be implemented by S601 and S602, which will be described with reference to the steps shown in Fig. 6.

S601: A difference between the elastic deformation trend and the deformation trend is equal to the dimensional tolerance of the outer diameter so as to obtain a yield rotation speed equation.

S602: The yield rotation speed equation is processed through a graphical method to obtain the yield rotation speed of the rotor.

The elastic deformation trend herein can be represented by an elastic deformation linear equation, and the deformation trend can be represented by a deformation curve equation. The difference between the elastic deformation trend and the deformation trend is configured to represent the plastic dimensional change caused by plastic deformation of the rotor.

In the embodiments of the present application, when the rotor structure does not undergo plastic deformation (that is, elastic deformation), the vibration information of the rotor is proportional to the square of the rotation speed. At this time, the vibration information actually comprises dynamic displacement dimensional changes caused by dynamic effects and the elastic deformation caused by the rotor structure. The vibration information of the rotor during elastic deformation can be expressed by Formula (4):

$$x_{c2} = x_d + \delta_f \qquad\qquad \text{Formula (4)}$$

wherein $x_{c2}$ represents vibration information of the rotor during the elastic deformation process, $x_d$ represents a dynamic displacement caused by dynamic effects, and $\delta_f$ represents an elastic dimensional change caused by elastic deformation of the rotor.

In the case where the rotor structure undergoes plastic deformation, the vibration information of the rotor comprises not only the dynamic displacement dimensional changes caused by dynamic effects and the elastic dimensional changes caused by elastic deformation of the rotor, but also the plastic dimensional changes caused by plastic deformation of the rotor. The vibration information of the rotor during plastic deformation can be expressed by Formula (5):

$$x_{c1} = x_d + \delta_f + \delta_p \qquad\qquad \text{Formula (5)}$$

wherein $x_{c1}$ represents vibration information of the rotor when plastic deformation occurs, $x_d$ represents a dynamic displacement caused by dynamic effects, $\delta_f$ represents an elastic dimensional change caused by elastic deformation of the rotor, and $\delta_p$ represents a plastic dimensional change caused by plastic deformation of the rotor.

Therefore, through subtracting Formula (5) from Formula (4), the plastic dimensional change caused by plastic deformation of the rotor can be obtained. When the plastic dimensional change caused by plastic deformation of the rotor begins to exceed the dimensional tolerance of the outer diameter of the rotor (that is, becomes equal to the dimensional tolerance of the outer diameter), it can be determined that the rotor starts to undergo plastic deformation, and the corresponding rotation speed is the yield rotation speed. As shown in Fig. 5, when the difference between vibration information corresponding to the deformation curve 501 and the elastic deformation straight line 503 is equal to the dimensional tolerance of the outer diameter $a$, the rotation speed corresponding to the horizontal coordinate is the yield rotation speed 504.

Based on Formula (2) and Formula (3), the above yield rotation speed equation can be expressed by Formula (6):

$$x_{c1}(n^2) - x_{c2}(n^2) = a \qquad \text{Formula (6)}$$

wherein $a$ is the dimensional tolerance of the outer diameter of the rotor.

It can be seen from Formula (6) that two variables are comprises in Formula (6) (that is, vibration information and rotation speed). Therefore, Formula (6) can be solved through a graphical method to obtain the value of $n$, and $n$ is the rotation speed at which the rotor begins to undergo plastic deformation, that is, the yield rotation speed.

In the embodiments of the present application, the difference between the elastic deformation trend and the deformation trend is equated to the dimensional tolerance of the outer diameter to obtain a yield rotation speed equation; then, the yield rotation speed equation is processed through a graphical method to obtain the yield rotation speed of the rotor. In this way, when the plastic dimensional change caused by plastic deformation of the rotor is equal to the dimensional tolerance of the outer diameter, it can be determined that plastic deformation occurs in the rotor, and the rotation speed corresponding to such plastic deformation can be determined by the graphical method. Accordingly, the yield rotation speed of the rotor can be accurately determined.

In some embodiments, S101 can be implemented by S701 to S703, which will be described with reference to the steps shown in Fig. 7.

S701: The dimensional tolerance of the outer diameter of the rotor, an initial rotation speed of the rotor, and a final rotation speed of the rotor are acquired.

In the embodiments of the present application, the step of acquiring the initial rotation speed of the rotor and the final rotation speed of the rotor comprises: acquiring a first rotation speed and a second rotation speed of the rotor; determining the initial rotation speed of the rotor as a product of the first rotation speed and a preset first multiplier; and determining the final rotation speed of the rotor as a product of the second rotation speed and a preset second multiplier. The first rotation speed is a rotation speed at which the rotor is expected to begin to undergo plastic deformation; the second rotation speed is a preset peak rotation speed of the rotor; the first multiplier is a positive number less than 1; and the second multiplier is greater than 1. For example, the first multiplier can be 0.5 and the second multiplier can be 1.5.

In some embodiments, the initial rotation speed can be preset. In other embodiments, a finite element analysis can be performed on the core of the rotor to obtain the initial rotation speed of the rotor. Since the first rotation speed is the rotation speed at which the rotor is expected to begin to undergo plastic deformation, and the actual yield rotation speed of the rotor (that is, the rotation speed at which the rotor begins to undergo plastic deformation) can be lower than the first rotation speed, the embodiments of the present application determine the initial rotation speed of the rotor as a product of the first rotation speed and the preset first multiplier. The peak rotation speed is the rotation speed set based on the design of the rotor during rotor manufacturing. In practical applications, the peak rotation speed is often conservative and does not reach the actual yield rotation speed of the rotor, that is, the peak rotation speed is generally lower than the actual yield rotation speed of the rotor. Therefore, the embodiments of the present application determine the final rotation speed of the rotor as a product of the second rotation speed and the preset second multiplier. In this way, the actual yield rotation speed of the rotor can be ensured to be comprises between the initial rotation speed and the final rotation speed.

S702: The plurality of specific rotation speeds are acquired between the initial rotation speed and the final rotation speed based on a preset step size.

The preset step size herein can be preset in advance. For example, when the initial rotation speed is 10,000 r/min and the final rotation speed is 50,000 r/min, the preset step size can be set to 10,000. In this case, the number of obtained specific rotation speeds is five, and the five specific rotation speeds are 10,000 r/min, 20,000 r/min, 30,000 r/min, 40,000 r/min, and 50,000 r/min, respectively.

S703: The vibration information of the rotor is acquired at each of the specific rotation speeds.

In the embodiments of the present application, a specific rotation speed can first be set in a high-speed prime mover, and after the rotor reaches the specific rotation speed and operates stably for a preset duration, a vibration displacement curve of the rotor can be acquired through a displacement sensor at the specific rotation speed, and the vibration displacement curve is a curve of vibration displacement varying with time. Then, the vibration information of the rotor at the specific rotation speed can be determined based on the vibration displacement curve. The vibration information can be a maximum vibration displacement of the rotor at the specific rotation speed.

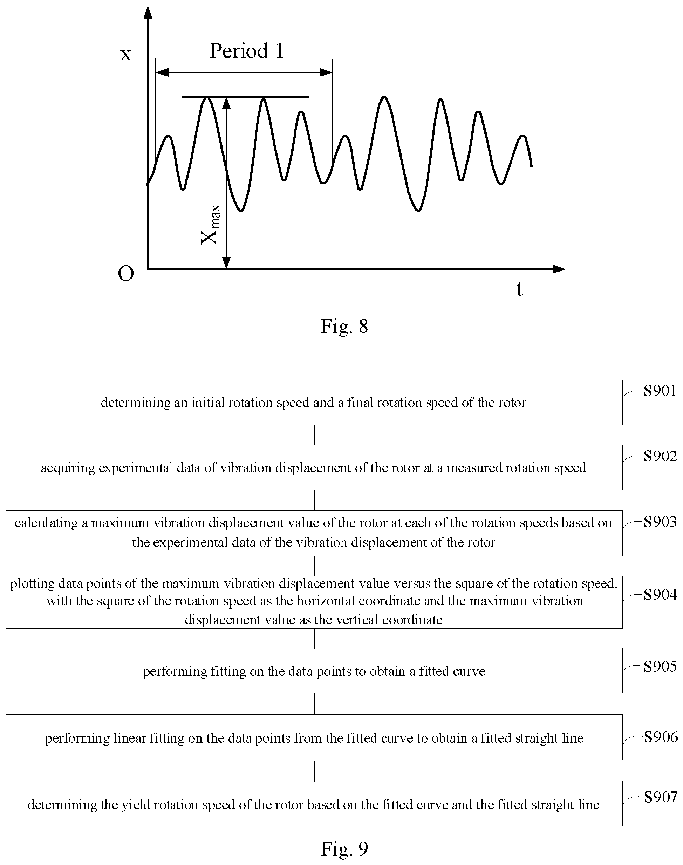

As shown in Fig. 8, the rotor performs a regular periodic motion at a specific rotation speed, and when determining the vibration information, vibration displacement data of the rotor within an integer number of motion periods can be acquired. For example, in the vibration displacement curve shown in Fig. 8, vibration displacement data of Period 1 can be obtained, and the vibration information of the rotor can be determined based on the vibration displacement data of Period 1, that is, the maximum vibration displacement ($x_{max}$). The vertical coordinate represents the vibration displacement (x) of the rotor, and the horizontal coordinate represents time (t).

In the embodiments of the present application, the plurality of specific rotation speeds are obtained between the initial rotation speed and the final rotation speed that comprise the yield rotation speed of the rotor based on the preset step size, and then the vibration information of the rotor at each of the specific rotation speeds is obtained. In this way, through acquiring the initial rotation speed and the final rotation speed, the true yield rotation speed of the rotor can be ensured to be comprised between the initial rotation speed and the final rotation speed, thereby improving the accuracy of determining the yield rotation speed of the rotor based on the plurality of specific rotation speeds between the initial rotation speed and the final rotation speed. Moreover, the plurality of specific rotation speeds are obtained between the initial rotation speed and the final rotation speed based on the preset step size, and the plurality of specific rotation speeds can be uniformly obtained, thereby improving the accuracy of determining the deformation trend and the elastic deformation trend of the rotor, and further improving the accuracy of determining the yield rotation speed of the rotor.

The embodiments of the present application provide a method for determining a yield rotation speed of a rotor, and the method can be executed by a processor of a computer device. As shown in Fig. 9, the method comprises S901 to S904:

S901: An initial rotation speed and a final rotation speed of the rotor are determined.

In the embodiments of the present application, a finite element analysis is performed on a rotor core to preliminarily determine the yield rotation speed at which the rotor begins to undergo plastic deformation (nf) as a reference. A half of the value of nf is taken as the initial rotation speed n1 of the high-speed experiment, that is, n1 = 0.5nf; and 1.5 times the designed peak rotation speed np of the rotor is taken as the final rotation speed n2 of the high-speed experiment, that is, n2 = 1.5np.

In some embodiments, before S901, the method for determining the yield rotation speed of the rotor further comprises:

Step 1: A rotor rotation test bench is constructed.

In the embodiments of the present application, a suitable tooling shaft can be designed according to the protruding end of the high-speed prime mover and connected to the tested rotor sample, and a non-contact displacement sensor (for example, an eddy current displacement sensor) can be installed at an appropriate position to monitor the vibration displacement of the rotor. The above rotor rotation test bench is shown in Fig. 2.

Step 2: A rotor core sample is manufactured according to a design scheme of a high-speed drive motor.

Step 3: A dynamic balancing process is performed on the rotor core sample.

In the embodiments of the present application, performing the dynamic balancing process on the rotor core sample can reduce the vibration amplitude of the rotor during high-speed operation.

S902: Experimental data of vibration displacement of the rotor is acquired at a measured rotation speed.

In the embodiments of the present application, on the rotor high-speed rotation test bench, the rotor is accelerated to the initial rotation speed n1 with a certain acceleration and then operated stably for 2 minutes, and the displacement sensor is adopted to acquire the vibration displacement curve of the rotor varying with time during stable operation. The experimental data of vibration signals during the 2-minute stable operation period is acquired for the measured rotation speeds within the range from n1 to n2 at a preset rotation speed step size.

S903: A maximum vibration displacement value of the rotor is calculated at each of the rotation speeds based on the experimental data of the vibration displacement of the rotor.

In the embodiments of the present application, for the typical vibration displacement curve of the rotor during stable operation (as shown in Fig. 8), the rotor performs a regular periodic motion. The vibration displacement data of the rotor within an integer number of motion periods can be selected, and the maximum vibration displacement value at each of the rotation speeds is calculated.

S904: Data points of the maximum vibration displacement value versus the square of the rotation speed are plotted, with the square of the rotation speed as the horizontal coordinate and the maximum vibration displacement value as the vertical coordinate.

S905: Fitting is performed on the data points to obtain a fitted curve.

In the embodiments of the present application, the curve fitting can be performed on the data points through a cubic spline interpolation function so as to obtain the fitted curve, and the curve passes through all the data points. The fitted curve can be expressed by Formula (2).

S906: Linear fitting is performed on the data points from the fitted curve to obtain a fitted straight line.

In the embodiments of the present application, the linear fitting can be performed on the first several data points that are approximately located on a straight line through the least squares method so as to obtain the fitted straight line. The fitted straight line can be expressed by Formula (3).

S907: The yield rotation speed of the rotor is determined based on the fitted curve and the fitted straight line.

In the embodiments of the present application, the dimensional tolerance of the outer diameter of the rotor can be denoted as $a$, and the difference between the fitted curve and the fitted straight line is set equal to $a$, thereby obtaining a yield rotation speed equation. The root $n$ of the yield rotation speed equation can be solved through a graphical method, and $n$ is the yield rotation speed of the rotor. The yield rotation speed equation can be expressed by Formula (6).

In the embodiments of the present application, during high-speed rotation of the rotor, the main excitation source of the dynamic response of the rotor is an unbalanced force caused by a rotor unbalance amount, and the calculation formula thereof is shown in Formula (1) above. Under the condition that the unbalanced force of the rotor is the main excitation, both the elastic deformation amount of the rotor structure (corresponding to the elastic dimensional change caused by elastic deformation of the rotor in the above embodiments) and the plastic deformation amount (corresponding to the plastic dimensional change caused by plastic deformation of the rotor in the above embodiments) are generated under the action of the unbalanced force, and the elastic deformation amount is proportional to the unbalanced force F. Meanwhile, the vibration displacement of the rotor is also approximately linearly related to the unbalanced force F in a range far from the critical rotation speed. That is, the relationships among the elastic deformation amount, the unbalanced force of the rotor, and the square of the rotation speed, as well as the relationships among the vibration displacement of the rotor, the unbalanced force of the rotor, and the square of the rotation speed, can be expressed by Formula (7):

$$\begin{cases} \delta_f \propto F \propto n^2 \\ x_c \propto F \propto n^2 \end{cases} \qquad \text{Formula (7)}$$

wherein $\delta_f$ represents an elastic deformation amount, F represents an unbalanced force of the rotor, $n$ represents a rotation speed, and $x_c$ represents a vibration displacement of the rotor.

In the embodiments of the present application, when the rotor structure does not undergo plastic deformation, the vibration displacement of the rotor is proportional to the square of the rotation speed. At this time, the vibration displacement actually comprises the dynamic displacement caused by dynamic effects and the elastic deformation caused by the rotor structure. That is, the vibration displacement corresponding to the elastic deformation straight line 503 in Fig. 5 can be expressed by Formula (4) above.

When the rotor structure undergoes plastic deformation, the vibration displacement of the rotor comprises not only the dynamic displacement and the elastic deformation, but also the plastic deformation of the rotor structure. That is, the vibration displacement corresponding to the deformation curve 501 in Fig. 5 can be expressed by Formula (5) above.

Therefore, the plastic deformation can be obtained through subtracting Formula (4) from Formula (5). When the difference between the vibration displacements corresponding to the two curves begins to exceed the dimensional tolerance of the outer diameter of the rotor, it can be determined that the rotor starts to undergo plastic deformation, and the corresponding rotation speed at this time is the yield rotation speed.

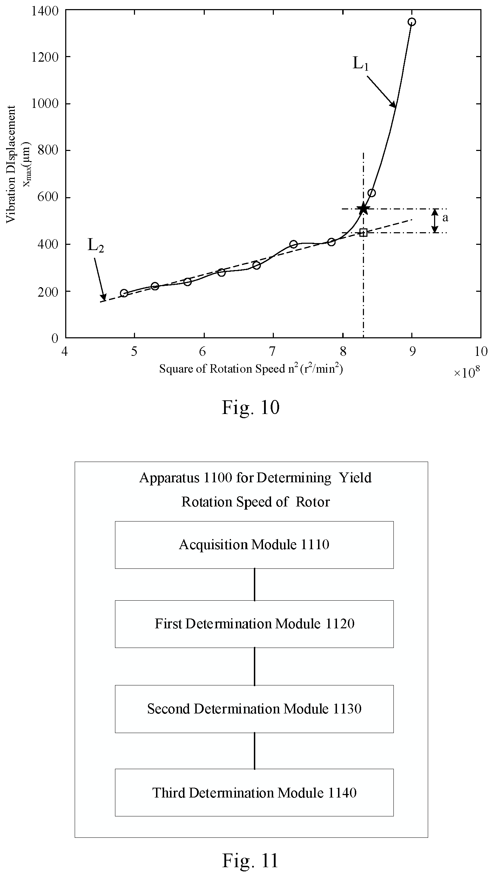

The proposed technical solution is further described below through taking experimental data of the yield rotation speed of a rotor of a high-speed drive motor as an example. The rotor of the high-speed drive motor has an outer diameter of 121 mm, and the dimensional tolerance (*a*) of the outer diameter is 100 $\mu$m. The experimental results of the yield rotation speed test of the rotor are shown in Fig. 10, the maximum vibration displacement value of the rotor at the measured rotation speed is denoted by "o", the curve obtained through fitting the experimental data using a cubic spline interpolation function is denoted by a solid line L1, and the curve obtained through linear fitting the first seven data points using the least squares method is denoted by a dashed line L2. The yield rotation speed equation is obtained through setting the difference between the equation corresponding to L1 and the equation corresponding to L2 equal to *a.* The yield rotation speed equation is then solved through a graphical method. The square of the rotation speed, $n^2 = 8.301 \times 10^8$ r$^2$/min$^2$, is the root of the yield rotation speed equation. At this point, $x_{c1}$ $(n^2) = 550$ $\mu$m and $x_{c2}$ $(n^2) = 450$ $\mu$m, which are respectively marked by "*" and "□" on curves L1 and L2. Finally, the yield rotation speed of the rotor is $n = 28,811$ r/min.

Based on the foregoing embodiments, the embodiments of the present application further provide an apparatus for determining a yield rotation speed of a rotor, and the apparatus comprises a plurality of modules, which can be implemented by a processor in a computer device; alternatively, the apparatus can also be implemented by a specific logic circuit; and in the implementation process, the processor can be a central processing unit (CPU), a microprocessor unit (MPU), a digital signal processor (DSP), or a field-programmable gate array (FPGA), etc.

Fig. 11 is a schematic structural diagram of an apparatus for determining a yield rotation speed of a rotor in an embodiment of the present application. As shown in Fig. 11, the apparatus 1100 for determining the yield rotation speed of the rotor comprises: an acquisition module 1110, a first determination module 1120, a second determination module 1130, and a third determination module 1140, wherein:

the acquisition module 1110 is configured to acquire a dimensional tolerance of an outer diameter of the rotor and vibration information of the rotor at each of the specific rotation speeds among a plurality of specific rotation speeds;

the first determination module 1120 is configured to determine a deformation trend of the rotor based on the plurality of specific rotation speeds and the vibration information at each of the specific rotation speeds;

the second determination module 1130 is configured to determine an elastic deformation trend of the rotor based on the deformation trend; and

the third determination module 1140 is configured to determine the yield rotation speed of the rotor based on the elastic deformation trend, the deformation trend, and the dimensional tolerance of the outer diameter.

In some embodiments, the deformation trend comprises a deformation curve equation; and the first determination module 1120 is further configured to determine a plurality of data points based on the plurality of specific rotation speeds and the vibration information at each of the specific rotation speeds; and perform a first fitting process on the plurality of data points to obtain the deformation curve equation.

In some embodiments, the second determination module 1130 is further configured to determine a plurality of elastic data points among the plurality of data points on the deformation curve equation; and determine the elastic deformation trend of the rotor based on the plurality of elastic data points.

In some embodiments, the elastic deformation trend comprises an elastic deformation linear equation; the second determination module 1130 is further configured to perform a second fitting process on the plurality of elastic data points to obtain the elastic deformation linear equation of the rotor.

In some embodiments, the third determination module 1140 is further configured to set a difference between the elastic deformation trend and the deformation trend equal to the dimensional tolerance of the outer diameter to obtain a yield rotation speed equation, wherein the difference between the elastic deformation trend and the deformation trend is configured to represent a plastic dimensional change caused by plastic deformation of the rotor; and process the yield rotation speed equation through a graphical method to obtain the yield rotation speed of the rotor.

In some embodiments, the acquisition module 1110 is further configured to acquire the dimensional tolerance of the outer diameter of the rotor, an initial rotation speed of the rotor, and a final rotation speed of the rotor, wherein the yield rotation speed is comprised between the initial rotation speed and the final rotation speed; acquire the plurality of specific rotation speeds between the initial rotation speed and the final rotation speed based on a preset step size; and acquire the vibration information of the rotor at each of the specific rotation speeds.

In some embodiments, the vibration information comprises a maximum vibration displacement; the acquisition module 1110 is further configured to, for each of the specific rotation speeds, acquire a vibration displacement curve of the rotor at the specific rotation speed; and for each of the specific rotation speeds, determine the maximum vibration displacement of the rotor based on the vibration displacement curve.

The description of the above apparatus embodiments is similar to that of the method embodiments described above and has similar advantageous effects as the method embodiments. In some embodiments, functions of the apparatus or modules comprised in the apparatus provided in the embodiments of the present disclosure can be used to perform the methods described in the above method embodiments. For technical details not disclosed in the apparatus embodiments, reference can be made to the description of the method embodiments.

It should be noted that, in the embodiments of the present application, when the above data processing method is implemented in the form of software functional modules and sold or used as an independent product, the software functional modules can also be stored in a computer-readable storage medium. Based on this understanding, the technical solution in the embodiment of the present application, or the part that contributes to the existing technology can be embodied as a software product. This software product is stored in a storage medium and comprises a plurality of instructions that enable a computer device (which can be a personal computer, server, or network device, etc.) to execute all or part of the method in the embodiments of the present application. The storage medium described above comprises, for example, a USB flash drive, a removable hard disk, a read-only memory (ROM), a magnetic disk, or an optical disk, and other media capable of storing program code. Therefore, the embodiments of the present application are not limited to any specific hardware, software, firmware, or any combination of hardware, software, and firmware.

The embodiments of the present application provide a computer device, which comprises a memory and a processor, the memory stores a computer program executable on the processor, and when the processor executes the program, part or all of the steps of the above method are implemented.

The embodiments of the present application provide a computer-readable storage medium, with a computer program stored thereon, and when the computer program is executed by a processor, part or all of the steps of the above method are implemented. The computer-readable storage medium can be transient or non-transient.

The embodiments of the present application provide a computer program, which comprises computer-readable code, and when the computer-readable code runs on a computer device, a processor in the computer device executes part or all of the steps of the method described above.

The embodiments of the present application provide a computer program product, which comprises a non-transient computer-readable storage medium storing a computer program, and when the computer program is read and executed by a computer, part or all of the steps of the above method are implemented. The computer program product can be implemented in hardware, software, or a combination of hardware and software. In some embodiments, the computer program product is embodied as a computer storage medium. In other embodiments, the computer program product is embodied as a software product, such as a software development kit (SDK).

It should be noted that the above description of the embodiments focuses on the differences among embodiments, and the similarities or common features among the embodiments can be referred to each other. The descriptions of the device, storage medium, computer program, and computer program product embodiments are similar to those of the above method embodiments and have similar beneficial effects as the method embodiments. For technical details not disclosed in the embodiments of the device, storage medium, computer program, and computer program product of the present application, reference can be made to the descriptions of the method embodiments of the present application.

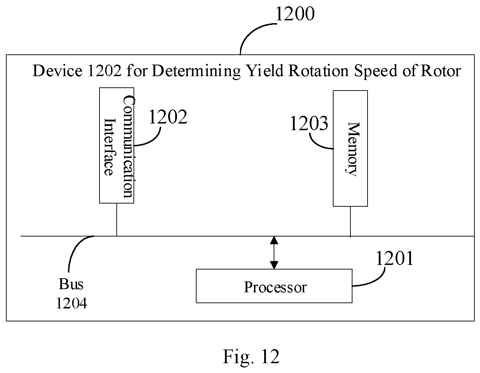

The embodiments of the present application provide a device for determining a yield rotation speed of a rotor. Fig. 12 is a schematic structural diagram of a device 1200 for determining a yield rotation speed of a rotor in an embodiment of the present application. As shown in Fig. 12, the device comprises a processor 1201, a communication interface 1202, and a memory 1203, wherein

the processor 1201 generally controls overall operations of the computer device 1200, and the overall operations can implement the method for determining the yield rotation speed of the rotor provided in the embodiments of the present application.

The communication interface 1202 can enable the computer device to communicate with other terminals or servers via a network.

The memory 1203 is configured to store instructions and applications executable by the processor 1201, and can further cache data to be processed or data that has been processed by the processor 1201 and modules in the computer device 1200 (for example, image data, audio data, voice communication data, and video communication data). The memory 1203 can be implemented by a flash memory (FLASH) or a random access memory (RAM). Data transmission among the processor 1201, the communication interface 1202, and the memory 1203 can be performed via a bus 1204.

The embodiments of the present application provide a computer program product or a computer program, and the computer program product or computer program comprises computer instructions, and the computer instructions are stored in a readable storage medium. The processor of the computer device reads the computer instructions from the readable storage medium and executes the computer instructions, so that the computer device performs the method for determining the yield rotation speed of the rotor in the above embodiments of the present application.

The embodiments of the present application provide a readable storage medium storing executable instructions, wherein when the executable instructions are executed by a processor, the processor is caused to execute the method for determining the yield rotation speed of the rotor provided in the embodiments of the present application.

It should be noted that the description of the storage medium and device embodiments is similar to that of the method embodiments and has similar beneficial effects as the method embodiments. For technical details not disclosed in the storage medium and device embodiments of the present application, reference can be made to the description of the method embodiments of the present application.

The processor can be at least one of an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, or a microprocessor. It is understandable that other electronic components capable of implementing the above functions of the processor can also be adopted, the embodiments of the present application does not impose any specific limitation.

The above computer storage medium/memory can be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM), or other types of memory. It can also be various terminals including one or any combination of the above memories, such as a mobile phone, a computer, a tablet device, a personal digital assistant, and the like.

It should be understood that reference throughout the specification to "one embodiment" or "an embodiment" means that particular features, structures, or characteristics related to the embodiment are comprised in at least one embodiment of the present application. Therefore, the phrases "in an embodiment" or "in one embodiment" appearing throughout the specification do not necessarily refer to the same embodiment. Furthermore, these particular features, structures, or characteristics can be combined in any suitable manner in one or more embodiments. It should be understood that, in the various embodiments of the present application, the numerical order of the above steps or processes does not imply any sequence of execution. The execution order of the steps or processes should be determined based on their functions and internal logic, and should not impose any limitation on the implementation of the embodiments of the present application. The above serial numbers in the embodiments of the present application are only for description, and do not represent the advantages or disadvantages of the embodiments.

It should be noted that the terms "include", "comprise" or any other variants thereof are intended to cover non-exclusive inclusion, so that a process, method, article or apparatus comprising a series of elements not only comprises those elements, but also other elements not explicitly listed, or elements inherent to such process, method, article or apparatus. If there are no more restrictions, the elements defined by the phrase "comprising a..." do not exclude the existence of other identical elements in the process, method, article, or apparatus comprising the elements.

In the several embodiments provided in the present application, it should be understood that the disclosed devices and methods can be implemented in other manners. The device embodiments described above are merely exemplary. For example, the division of units is only a logical functional division. In actual implementation, other division approaches can be adopted, such as: a plurality of units or components can be combined, or integrated into another system, or some features can be omitted or not executed. In addition, the couplings, or direct couplings, or communication connections between the components shown or discussed can be indirect couplings or communication connections through certain interfaces, devices, or units, and can be electrical, mechanical, or in other forms.

The units described as separate components may or may not be physically separated, and the components shown as units may or may not be physical units; they may be located in one place or distributed across multiple network units, and some or all of the units may be selected according to actual requirements to achieve the objectives of the solution of the present embodiment.

In addition, all functional units in each embodiment of the present application can be fully integrated into a single processing unit, or each unit can be individually provided as a separate unit, or two or more units can be integrated into a single unit; the integrated units can be implemented in hardware, or in a combination of hardware and software functional units.

Those skilled in the art can understand that all or part of the steps of the above method embodiments can be implemented by hardware related to program instructions, the aforementioned program can be stored in a computer-readable storage medium, and when executed, the program executes the steps of the above method embodiments; and the aforementioned storage medium comprises various media capable of storing program codes, such as a mobile storage device, a ROM, a magnetic disk, or an optical disk.

Alternatively, if the integrated units of the present application are implemented as software functional modules and sold or used as independent products, they can also be stored in a computer-readable storage medium. Based on such understanding, the technical solution the present application, or the part that contributes to the related art can be embodied in the form of a software product, and the computer software product is stored in a storage medium and comprises a plurality of instructions that enable a computer device (which can be a personal computer, server, or network device, etc.) to execute all or part of the method in the various embodiments of the present application. The storage medium comprises various media capable of storing program codes, such as a mobile storage device, a ROM, a magnetic disk, or an optical disk.

The above descriptions are merely illustrative of the embodiments of the present application, and the protection scope of the present application is not limited thereto. Any variations or substitutions readily apparent to those skilled in the art within the technical scope disclosed in the present application shall fall within the protection scope of the present application.

## Claims

1.    A method for determining a yield rotation speed of a rotor, comprising the following steps:

acquiring a dimensional tolerance of an outer diameter of the rotor and vibration information of the rotor at each of the specific rotation speeds among a plurality of specific rotation speeds;
determining a deformation trend of the rotor based on the plurality of specific rotation speeds and the vibration information of the rotor at each of the specific rotation speeds;
determining an elastic deformation trend of the rotor based on the deformation trend, wherein the deformation trend and the elastic deformation trend are configured to represent changes in the outer diameter of the rotor; and
determining the yield rotation speed of the rotor based on the elastic deformation trend, the deformation trend, and the dimensional tolerance of the outer diameter.

2.    The method according to claim 1, wherein the deformation trend comprises a deformation curve equation; and the step of determining the deformation trend of the rotor based on the plurality of specific rotation speeds and the vibration information of the rotor at each of the specific rotation speeds comprises:

determining a plurality of data points based on the plurality of specific rotation speeds and the vibration information at each of the specific rotation speeds; and
performing a first fitting process on the plurality of data points to obtain the deformation curve equation.

3.    The method according to claim 2, wherein the step of determining the elastic deformation trend of the rotor based on the deformation trend comprises:

determining a plurality of elastic data points among the plurality of data points on the deformation curve equation; and

determining the elastic deformation trend of the rotor based on the plurality of elastic data points.

4. The method according to claim 3, wherein the elastic deformation trend comprises an elastic deformation linear equation; and the step of determining the elastic deformation trend of the rotor based on the plurality of elastic data points comprises:
performing a second fitting process on the plurality of elastic data points to obtain the elastic deformation linear equation of the rotor.

5. The method according to any one of claims 1 to 4, wherein the step of determining the yield rotation speed of the rotor based on the elastic deformation trend, the deformation trend, and the dimensional tolerance of the outer diameter comprises:

equating a difference between the elastic deformation trend and the deformation trend to the dimensional tolerance of the outer diameter to obtain a yield rotation speed equation, wherein the difference between the elastic deformation trend and the deformation trend is configured to represent a plastic dimensional change caused by plastic deformation of the rotor; and
processing the yield rotation speed equation through a graphical method to obtain the yield rotation speed of the rotor.

6. The method according to any one of claims 1 to 4, wherein the step of acquiring the dimensional tolerance of the outer diameter of the rotor and vibration information of the rotor at each of the specific rotation speeds among the plurality of specific rotation speeds comprises:

acquiring the dimensional tolerance of the outer diameter of the rotor, an initial rotation speed of the rotor, and a final rotation speed of the rotor, wherein the yield rotation speed is comprised between the initial rotation speed and the final rotation speed;
acquiring the plurality of specific rotation speeds between the initial rotation speed and the final rotation speed based on a preset step size; and
acquiring the vibration information of the rotor at each of the specific rotation speeds.

7. The method according to claim 6, wherein the vibration information comprises a maximum vibration displacement; and the step of acquiring the vibration information of the rotor at each of the specific rotation speeds comprises:

for each of the specific rotation speeds, acquiring a vibration displacement curve of the rotor at the specific rotation speed; and
for each of the specific rotation speeds, determining the maximum vibration displacement of the rotor based on the vibration displacement curve.

8. An apparatus for determining a yield rotation speed of a rotor, comprising:

an acquisition module, which is configured to acquire a dimensional tolerance of an outer diameter of the rotor and vibration information of the rotor at each of the specific rotation speeds among a plurality of specific rotation speeds;
a first determination module, which is configured to determine a deformation trend of the rotor based on the plurality of specific rotation speeds and the vibration information of the rotor at each of the specific rotation speeds;
a second determination module, which is configured to determine an elastic deformation trend of the rotor based on the deformation trend; and
a third determination module, which is configured to determine the yield rotation speed of the rotor based on the elastic deformation trend, the deformation trend, and the dimensional tolerance of the outer diameter.

9. A device for determining a yield rotation speed of a rotor, comprising a memory and a processor, wherein the memory stores a computer program executable on the processor, and when the processor executes the program, the steps of the method according to any one of claims 1 to 7 are implemented.

10. A computer-readable storage medium, with a computer program stored thereon, wherein when the computer program is executed by a processor, the steps of the method according to any one of claims 1 to 7 are implemented.

| | |
|---|---|
| acquiring a dimensional tolerance of an outer diameter of the rotor and vibration information of the rotor at each of the specific rotation speeds among a plurality of specific rotation speeds | S101 |
| determining a deformation trend of the rotor based on the plurality of specific rotation speeds and the vibration information of the rotor at each of the specific rotation speeds | S102 |
| determining an elastic deformation trend of the rotor based on the deformation trend | S103 |
| determining the yield rotation speed of the rotor based on the elastic deformation trend, the deformation trend, and the dimensional tolerance of the outer diameter | S104 |

Fig. 1

Fig. 2

acquiring a dimensional tolerance of an outer diameter of the rotor and vibration information of the rotor at each of the specific rotation speeds among a plurality of specific rotation speeds — S101

determining a plurality of data points based on the plurality of specific rotation speeds and the vibration information at each of the specific rotation speeds — S301

performing a first fitting process on the plurality of data points to obtain a deformation curve equation — S302

determining an elastic deformation trend of the rotor based on the deformation curve equation — S303

determining the yield rotation speed of the rotor based on the elastic deformation trend, the deformation trend, and the dimensional tolerance of the outer diameter — S104

Fig. 3

determining a plurality of elastic data points among the plurality of data points on the deformation curve equation — S401

determining an elastic deformation trend of the rotor based on the plurality of elastic data points — S402

Fig. 4

Fig. 5

acquiring a dimensional tolerance of an outer diameter of the rotor and vibration information of the rotor at each of the specific rotation speeds among a plurality of specific rotation speeds ⌐S101

determining a deformation trend of the rotor based on the plurality of specific rotation speeds and the vibration information of the rotor at each of the specific rotation speeds ⌐S102

determining an elastic deformation trend of the rotor based on the deformation trend ⌐S103

equating a difference between the elastic deformation trend and the deformation trend to the dimensional tolerance of the outer diameter to obtain a yield rotation speed equation ⌐S601

processing the yield rotation speed equation through a graphical method to obtain the yield rotation speed of the rotor ⌐S602

Fig. 6

acquiring the dimensional tolerance of the outer diameter of the rotor, an initial rotation speed of the rotor, and a final rotation speed of the rotor ⌐S701

acquiring the plurality of specific rotation speeds between the initial rotation speed and the final rotation speed based on a preset step size ⌐S702

acquiring the vibration information of the rotor at each of the specific rotation speeds ⌐S703

acquiring the dimensional tolerance of the outer diameter of the rotor and the vibration information of the rotor at each of the specific rotation speeds among the plurality of specific rotation speeds ⌐S101

determining a deformation trend of the rotor based on the plurality of specific rotation speeds and the vibration information of the rotor at each of the specific rotation speeds ⌐S102

determining an elastic deformation trend of the rotor based on the deformation trend ⌐S103

determining the yield rotation speed of the rotor based on the elastic deformation trend, the deformation trend, and the dimensional tolerance of the outer diameter ⌐S104

Fig. 7

Fig. 8

| | |
|---|---|
| determining an initial rotation speed and a final rotation speed of the rotor | S901 |
| acquiring experimental data of vibration displacement of the rotor at a measured rotation speed | S902 |
| calculating a maximum vibration displacement value of the rotor at each of the rotation speeds based on the experimental data of the vibration displacement of the rotor | S903 |
| plotting data points of the maximum vibration displacement value versus the square of the rotation speed, with the square of the rotation speed as the horizontal coordinate and the maximum vibration displacement value as the vertical coordinate | S904 |
| performing fitting on the data points to obtain a fitted curve | S905 |
| performing linear fitting on the data points from the fitted curve to obtain a fitted straight line | S906 |
| determining the yield rotation speed of the rotor based on the fitted curve and the fitted straight line | S907 |

Fig. 9

Fig. 10

Fig. 11

1200

Device 1202 for Determining Yield Rotation Speed of Rotor

Communication Interface

1202

1203

Memory

Bus
1204

Processor

1201

Fig. 12

## INTERNATIONAL SEARCH REPORT

| International application No. |
| --- |
| **PCT/CN2024/120591** |

| | |
| --- | --- |
| **A. CLASSIFICATION OF SUBJECT MATTER** | |
| G06F30/23(2020.01)i | |

According to International Patent Classification (IPC) or to both national classification and IPC

| |
| --- |
| **B. FIELDS SEARCHED** |

Minimum documentation searched (classification system followed by classification symbols)

  IPC:G06F

Documentation searched other than minimum documentation to the extent that such documents are included in the fields searched

Electronic data base consulted during the international search (name of data base and, where practicable, search terms used)

  CNABS; CNTXT; DWPI; VEN; USTXT; EPTXT; CNKI; IEEE; 百度, BAIDU; Bing: 屈服转速, 转子, 电机, 振动, 弹性, 塑性形变, 外径, 拟合, 曲线, yield speed, rotor, electric motor, vibration, elastic, plastic deformation, outer diameter, fitting, curve

| |
| --- |
| **C. DOCUMENTS CONSIDERED TO BE RELEVANT** |

| Category* | Citation of document, with indication, where appropriate, of the relevant passages | Relevant to claim No. |
| --- | --- | --- |
| PX | CN 117494497 A (DONGFENG MOTOR GROUP CO., LTD.) 02 February 2024 (2024-02-02)<br>    claims 1-10, description, paragraphs 43-167 | 1-10 |
| A | CN 116878451 A (HUBEI UNIVERSITY OF AUTOMOTIVE TECHNOLOGY) 13 October 2023 (2023-10-13)<br>    description, paragraphs [0022]-[0035] | 1-10 |
| A | JP 2005185081 A (NISSAN MOTOR CO., LTD.) 07 July 2005 (2005-07-07)<br>    description, paragraphs 46-52 | 1-10 |
| A | CN 112016223 A (ZHEJIANG HIRO AVIATION TECHNOLOGY CO., LTD. et al.) 01 December 2020 (2020-12-01)<br>    entire document | 1-10 |
| A | 陈恩涛 等 (CHEN, Entao et al.). "高速永磁转子失效转速分析 (Non-official translation: Analysis of Failure Speed in High-Speed Permanent Magnet Rotors)"<br>机电信息 *(Mechanical and Electrical Information)*, No. 11, 15 April 2020 (2020-04-15), ISSN: 1671-0797,<br>    pages 121 and 123 | 1-10 |

| | | | |
| --- | --- | --- | --- |
| ☐ Further documents are listed in the continuation of Box C. | | ☑ See patent family annex. | |

| |
| --- |
| * Special categories of cited documents: |

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| | |
| --- | --- |
| Date of the actual completion of the international search | Date of mailing of the international search report |
| **28 December 2024** | **01 January 2025** |
| Name and mailing address of the ISA/CN | Authorized officer |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/120591**

| Patent document cited in search report | | | Publication date (day/month/year) | Patent family member(s) | | | Publication date (day/month/year) |
|---|---|---|---|---|---|---|---|
| CN | 117494497 | A | 02 February 2024 | None | | | |
| CN | 116878451 | A | 13 October 2023 | None | | | |
| JP | 2005185081 | A | 07 July 2005 | None | | | |
| CN | 112016223 | A | 01 December 2020 | CN | 112016223 | B | 19 April 2024 |

Form PCT/ISA/210 (patent family annex) (July 2022)